# EUROPEAN PATENT APPLICATION

(11) **EP 1 674 822 A1**
(43) Date of publication of application: **28.06.2006**
(21) Application number: 05027856.3
(22) Date of filing: 20.12.2005
(51) Int. Cl.: G01B 5/00, G01B 11/24, G01M 11/02, G01M 11/04, G02B 7/00

(54) **Device and method for non-contact scanning of contact lens mold geometry**

(30) Priority: 22.12.2004 US 638649 P
(71) Applicant: Novartis AG, 4056 Basel (CH); NOVARTIS-PHARMA GMBH, 1230 Vienna (AT)
(72) Inventor: Hall, Jordan William, Atlanta, GA 30319 (US)
(74) Representative: Dietz, Jörg-Reimar

(57) **Abstract**

This invention relates to an apparatus and method for measuring the geometry of a precision mold, particularly a non-linear mold used for ophthalmic lenses, preferably contact lenses.

## Description

This invention relates to an apparatus and method for measuring the geometry of a precision mold, particularly a non-linear mold used for ophthalmic lenses, preferably contact lenses.

Ophthalmic lenses may be created using a variety of methods, one of which includes molding. In a double sided molding process, the lenses are manufactured between two molds without subsequent machining of the surfaces or edges. Such mold processes are described, for example in US 6113817. As such, the geometry of the lens is determined by the geometry of the mold. Once a mold is designed and fabricated it must be measured to ensure that it meets the proper specifications. Typical molds may be spherical or non-spherical, depending upon the type of lens to be created. Because most molds have one or more arcuate surfaces, linear coordinates may be unable to measure a curved surface accurately or may only be able to accurately measure portions of the mold geometry. Current methods include using laser based systems with linear (x,y,z) movements. The methods are limited in that they may only be able to measure the optical zone.

Additionally, the mold material affects the end product, as the mold material may undergo non-uniform shrinkage. Defects such as cylinder and differential shrinkage are difficult to measure and to characterize. Typically, mold geometry may be measured by a video measurement device, such as the Nikon VMR, but the result is a best-fit radius that does not really capture the true shape of the surface.

Currently, measuring lens molds does not produce a full surface characterization. Devices exist, such as interferometer based systems, that are able to measure the dimensions of a curved surface, but can only collected data on approximately spherical surfaces with relatively flat radii of curvature. Additionally, the commercially available devices cannot capture a large area such as the entire 12 mm to 15 mm, preferably 14 mm diameter lens area of a mold for conventional contact lenses, for example.

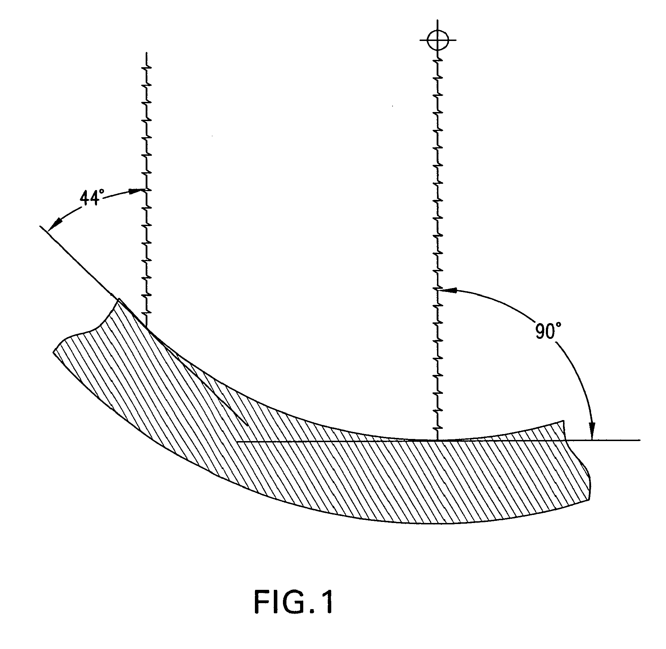

Typical laser-based surface measuring machines move in x,y,z linear coordinates. Because most molds have one or more curved surfaces, this type of movement is not optimal. Additionally, the laser beam is typically constrained to be normal to the mold at the center point of the mold. As the laser beam scans the curved sides of the mold by moving up the sides of the mold, the angle of incidence between the laser and the mold starts to increase. Most laser based systems must be oriented nearly perpendicular to the surface that they measure accurately. When the incident angle becomes less than a certain value, the head (sensor) can no longer sense reflections from the surface. This angle defines a "cone of acceptance." If the incident angle is within the cone of acceptance, the measured distance will be accurate. When a curved surface is scanned by a linear coordinate system, the outer portions of the curved surface cannot be read because the normal line to the surface is more than 25 degrees from the incident laser beam. This concept is illustrated in Figure 1. If the mold is rotated during a scan, the beam may remain normal to the mold; however, commercially available devices typically have large, heavy movement platforms that are difficult to rotate accurately.

The present invention seeks to provide a non-destructive, non-contact method and apparatus for determining mold geometry. The present invention may also provide a non-destructive, non-contact method and apparatus for determining the geometry of mold tools. In one embodiment of the present invention the apparatus for measuring the precise geometry of an ophthalmic lens mold or mold tooling may include a fixture, a scanning measurement means that does not contact a sample, and a rotatable platform capable of maintaining a position normal to the scanning measurement means. In one embodiment of the present invention, a data collection means may be included. In a related embodiment of the present invention, the measurement means may be a sensor. In a related embodiment, the sensor may be a laser. In another embodiment, the fixture may include a plurality of grippers. In a related embodiment the grippers may be parallel pneumatic grippers.

In one embodiment of the present invention the rotatable platform may include more than one rotational stage. In a related embodiment, the stages may be positioned perpendicular to each other. In another embodiment the rotational stages may be positioned by a bracket. In still another embodiment, the rotatable platform may be a compact rotary stage mounted on a goniometer. The rotatable platform may also include a Stewart platform.

The present invention also includes a method for scanning a precision arcuate surface in spherical coordinates. The method may include installing said sample mold in a fixture associated with a rotatable platform; placing said sample mold in optical connection with a scanning measurement means by tilting, rotating, or translating said mold in relation to said scanning means; finding a reference surface on said sample mold; scanning the surface of said sample mold with said scanning measurement means to obtain distance data; and collecting scanned distance data from said measurement means.

In a further embodiment, the installing step further comprises rotating said mold through one or more meridians or semi-meridians. The installing step may also include providing one or more rotary stages. In a related embodiment, the method of the present invention may include archiving any data collected in a database application and/or analyzing the data to create a 3D surface plot.

The method of the present invention may also include the step of calibrating said scanning measurement means.

The present invention may also include an apparatus and method measuring precise geometry of an ophthalmic lens mold tooling

### Description of the Drawings

Figure 1 depicts the relationship between a curved surface and a scanner.
Figure 2 is a three-dimensional illustration of one embodiment of the present invention.
Figure 3 is a three-dimensional side view of one embodiment of the present invention.
Figure 4 is a flowchart of exemplary steps used in the methods of the present invention.

The present invention comprises an apparatus and method to more accurately measure the geometry of an ophthalmic lens mold. In a preferred embodiment, the present invention is able to scan the entire surface of the mold that is used for making the lens, including the optical zone, to provide a precise landscape of the mold. The invention comprises a laser based system and at least one rotary stage or other type of platform to move the mold to enable a sensor to view the entire arcuate surface of the mold for data collection. The present invention also includes a component for holding or gripping the sample molds during the measurement process.

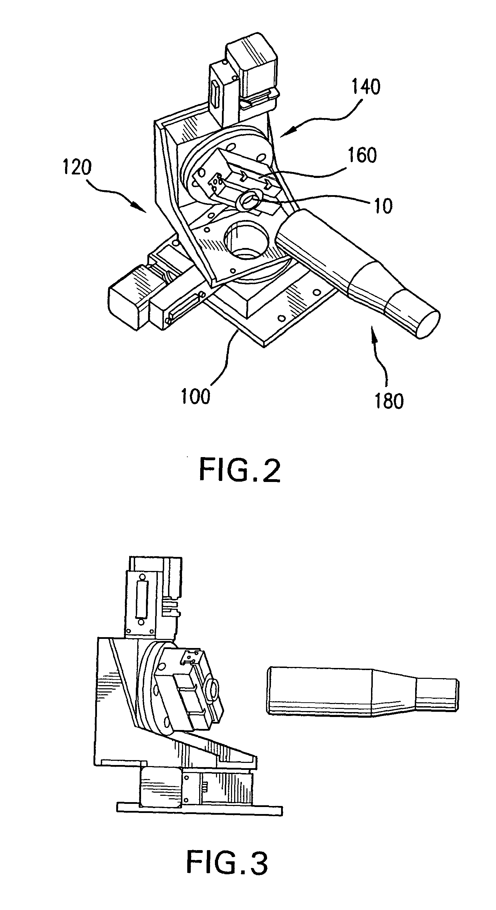

Figure 2 depicts a general configuration of the apparatus of the present invention. In this embodiment a first rotary stage 100 is preferably used to tilt a mold sample through a section for scanning. The section may be a meridian or semi-meridian. Rotary stage 100 is also preferably adapted to sit flat upon a horizontal surface. First rotary stage 100 is preferably adapted to connect to second rotary stage 140 via a 90 degree bracket 120. Any other type of bracket that is mechanically equivalent may also be used. The second rotary stage 140 preferably has one or more pneumatic grippers 160 that are adapted to hold a mold sample 10 during a scan. Sensor 180 is adapted to scan sample mold 10 and may be stationary relative to the movements of first stage 100 and second stage 140.

Any type of sensor, such as a non-contact measurement head, can be used in conjunction with the present invention. Laser-based systems are preferred, but ultrasonic, IR or UV radiation, or any other type of reflection can be used. The laser based system preferably uses laser distance measurement. This system preferably uses reflected light to determine the distance to the sample mold. In a preferred embodiment, a spectral laser may be used that is adapted to work in conjunction with an extremely smooth surface finish on the part. The resolution of the laser based system is preferably high, most preferably 1 micron or less.

In one embodiment, a stand-alone laser may be used to scan a mold. Examples of such lasers include, for example, the Quest 250 or Cobra, as manufactured by OGP Optical Gaging Products Inc. (Rochester, NY, USA). Such systems preferably use a combination of visual and laser scans with stacked linear x, y, z stages.

A preferred accuracy may average about 1 micron through an approximate 0.5mm distance range. The beam diameter may be up to 23 microns at the top of the distance range, and may be reduced down to 16 microns at the center of the range. If the mold is kept in the center of the distance range, it may be possible to increase accuracy to a sub-micron range. Dynamic resolution may be as high as 125 nm.

As shown in Figure 2, in one embodiment, the mold may be placed on a platform of some type that is adapted to hold it securely and provide rotational movement. In a specific embodiment, the invention may have two rotational stages (a first rotational stage 100 and a second rotational stage 140) mounted at approximately 90 degrees relative to each other to provide rotational movement. In this embodiment a bracket 120 is preferably mounted to the movement platform of first stage 100 to allow the entire bracket to rotate. The second stage 140 is preferably mounted to bracket 120. Mold sample 10 is preferably mounted on the platform of second stage 140. By rotating both stages, the mold may be pivoted about a point in space. If this point is the center of curvature of the optics on the mold, a laser beam passing through that pivot point would preferably remain normal to the surface of the mold during the entire scan or measurement process. This type of motion allows the measurement device to scan the mold in spherical coordinates (two rotations and a distance) instead of typical Cartesian coordinates (x,y,z). In this arrangement, first stage 100 preferably provides the tilt and the second stage 140 preferably moves the sample part (mold) 10 through different meridians or semi-meridians. In a preferred embodiment, speed may approach 130 deg/sec and resolution may be greater than 0.001 degrees, preferably 0.00005 degrees.

In another embodiment, a compact rotary stage, such as those manufactured by Newport, Inc. (Irvine, CA, USA), may be mounted on a goniometer. In this embodiment, the fixturing is designed such that the goniometer rotates around the center of the optical surface of the mold, i.e., the mold and the goniometer preferably have the same center of rotation. In this embodiment, as the goniometer rotates, the mold tilts in relation to the laser beam and the beam scans across one meridian or semi-meridian of the mold. The rotary stage may then rotate to move the part to a different orientation. When the goniometer tilts through its range of motion again, the laser beam preferably scans a different meridian or semi-meridian. In this embodiment, the goniometer is adapted to rotate approximately 20 deg/sec and preferably has a resolution of 0.001 degrees.

Another embodiment of the present invention may include using a Stewart platform, which is known to the person skilled in the art. In a preferred embodiment, a parallel kinematics robot is adapted to move a sample in any arbitrary scan path within its field of movement. The scan path may include linear and/or rotational movements including combined movements. Such movements preferably result in a complex 3D movement path. In another embodiment, the parallel kinematics robot may be substituted for the rotational stages, but the principal remains the same. With the parallel kinematics, the pivot point can be arbitrary and is not limited by the staging.

In the present invention, the mold must be firmly gripped to provide accurate measurement without obscuring the surface to be measured. Ophthalmic lens molds are typically difficult to measure because arcuate surfaces are difficult to grip and also must be visible to the scanning head. If the central axis of the optics to be scanned are not aligned with the axis of rotation of the stage, precision errors may result. If cylinder is present, especially in molds used to correct astigmatism, it may be difficult to find a truly round surface to grip. The present invention, particularly the fixture allows mold or tool loading without difficulty. Additionally, in a preferred embodiment, fixturing should not sit on the critical lip area to prevent obscuring the optical surface of the laser.

In one embodiment, such as that shown in Figures 2 and 3, a plurality of pneumatic parallel grippers (160) may be used. Specifically, a 3-jaw parallel movement gripper may be used. This type of gripper resembles the chuck of a lathe, having a circular shape with a plurality of square jaws that protrude from the top surface. In a preferred embodiment of this type, there may be three grippers located at approximately 120 degrees relative to each other. These grippers are preferably adapted to clamp to the outside diameter of the mold.

In another embodiment of the present invention, the mold material may be changed or slightly altered to produce more accurate measurements. For example, fillers may be added to the mold material to produce a mold with higher reflectivity to certain types of radiation. Additionally, such changes may improve the signal to noise ratio.

The present invention may also mitigate measurement errors due to shrinkage by fully characterizing the entire surface. By doing so, the shrinkage over the entire surface may be actually measured instead of extrapolating measurements taken at isolated points or an estimating overall shrinkage value. Typically, shrinkage is measured by the diameter and sagital height of the lens. The design sagital height is compared to the actual sagital height to provide a height shrinkage. The diameter shrinkage provides X and Y shrinkage (assumed to be equal). This method uses single point values to describe a complex, 3D process. The present invention allows full measurement of 3D shape, providing a deformation calculation across the surface at many different points.

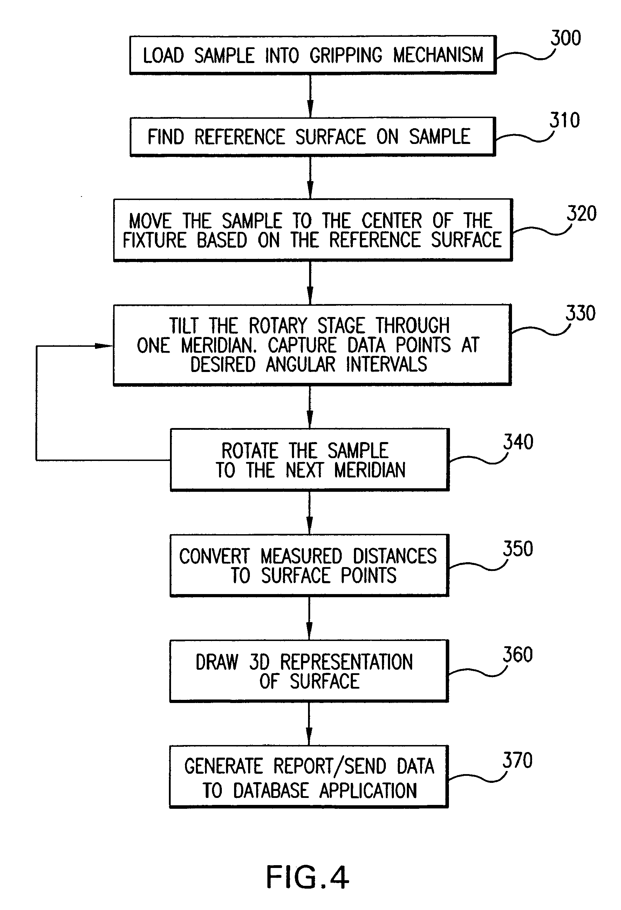

The method of the present invention is depicted in Figure 4. Referring to Figure 4, in one embodiment of the method of the present invention, the mold is measured. The apparatus (hardware and software) is preferably calibrated before or during the measurement process. The mold is preferably installed in the grippers that are affixed in the second stage in step 300. The mold may then be scanned in step 310 to determine a reference surface on the sample. The reference surface may be a particular surface that has functional use in the mold such as a critical lip flat, for example. The reference area is preferably flat such that when in contact with a laser there is a constant signal. The exact location of the reference point with respect to the center of the mold is preferably known and hence, the center of the mold may be located once the sensor finds the reference point.

Next, the mold may be scanned. Scanning the mold may require multiple steps. In step 320, the sample mold may be moved to the center of the fixture based upon the reference surface. Next, in step 330, the mold sample may be tilted or rotated through one meridian or semi-meridian while data points are captured at desired angular meridians or semi-meridians. Next, the sample may be rotated to the next meridian in step 340. Steps 330 and 340 may be performed in one or more loops to produce sufficient data to fully characterize the surface.

In step 350 the distanced measured by the sensor is preferably converted to surface points. This may include generating and storing results in the form of angle and distance (angle, distance) and converting the data from polar to (x,y) coordinates. Next, all of the scans may be analyzed and recreated as a 3D representation of a surface in step 360. Because the data is initially stored in cylindrical coordinates (x,z, theta), it may be easily converted to Cartesian (x,y,z) coordinated and plotted. Basically, the (x,z) data is just the cross-section data from each meridian. After the 3D representation is created, a report may be generated and/or sent to a database application in step 370.

These steps may not need to be performed in the exact order described above, but rather, may be performed in any logical progression.

The measurement system is preferably controlled through a PC. Once the data is collected, it may be reduced to a set of points defining a surface. The data output generated by the present invention is very flexible. As stated previously, the measurement method generates results in the form of angle and distance (angle, distance) and converts the data from polar to (x,y) coordinates , forming a 2D matrix of (x,z, theta) points. After a plurality of meridians are scanned, the data may be fitted to a surface via a mathematical representation of the surface, and plotted. Individual data slices may also be plotted from the data. Because the fitted surface can be interpolated, the user can select a particular slice of the surface. Also, simplified measurements such as radius over a specific diameter or polynomial fits can be applied to the data. If the full geometry of the design surface is available, the deviation of the actual surface from the design surface can be plotted.

The present invention may also be used to measure optical tools. For example, the alignment of a tool or the engraving marks may be measured. If the optical tool is scanned before molding, the tool surface may be compared to the mold surface. This type of comparison may provide an accurate measurement of mold shrinkage. Non-axis symmetric shrinkage would not affect such analysis because the present invention allows the shrinkage to be calculated at multiple points over the entire surface.

## Claims

1. An apparatus for measuring precise geometry of an ophthalmic lens mold sample comprising:
a fixture adapted to present a full view of the mold surface for inspection, wherein said fixture is connected to a rotatable platform and wherein said rotatable platform is capable of maintaining the position of said fixture normal to a scanning measurement means; and
a scanning measurement means, wherein said measurement means does not contact said sample and is adapted to measure the distance to the mold surface.

2. The apparatus of claim 1, wherein said measurement means is a laser based system.

3. The apparatus of claim 1, wherein said fixture further comprises a plurality of grippers.

4. The apparatus of claim 3, wherein said grippers are parallel pneumatic grippers.

5. The apparatus of claim 1, wherein said rotatable platform further comprises more than one rotational stage.

6. The apparatus of claim 5, wherein said more than one rotational stages are positioned perpendicular to one another.

7. The apparatus of claim 6, wherein said rotational stages are positioned by a bracket.

8. The apparatus of claim 1, wherein said rotatable platform further comprises a compact rotary stage mounted on a goniometer.

9. The apparatus of claim 1, wherein said rotatable platform further comprises a Stewart platform.

10. A method for scanning a precision arcuate surface in spherical coordinates comprising:
Installing said sample mold in a fixture associated with a rotatable platform;
Placing said sample mold in optical connection with a scanning measurement means by tilting, rotating, or translating said mold in relation to said scanning means;
Finding a reference surface on said sample mold
Scanning the surface of said sample mold with said scanning measurement means to obtain distance data; and
Collecting scanned distance data from said measurement means.
